# EUROPÄISCHE PATENTSCHRIFT

(11) **EP 3 409 731 B1**
(45) Veröffentlichungstag und Bekanntmachung des Hinweises auf die Patenterteilung: **11.08.2021**
(21) Anmeldenummer: 17173580.6
(22) Anmeldetag: 30.05.2017
(51) Int. Cl.: C09D 11/00, C09D 11/30, C09D 11/322, C09D 11/326

(54) **WASSERBASIERTE TINTENZUSAMMENSETZUNG ZUM BEDRUCKEN VON KUNSTSTOFFOBERFLÄCHEN**
WATER-BASED INK COMPOSITION FOR PRINTING PLASTIC SURFACES
COMPOSITION D'ENCRES À BASE D'EAU DESTINÉE À L'IMPRESSION DE SURFACES PLASTIQUES

(43) Veröffentlichungstag der Anmeldung: 05.12.2018
(73) Patentinhaber: Artech GmbH design + production in plastic, 44149 Dortmund (DE)
(72) Erfinder: BÜCKER, Michel, 44627 Herne (DE); MANCA, Giovanni M., 44579 Castrop-Rauxel (DE); KARAASLAN, Ulas, 45879 Gelsenkirchen (DE)
(74) Vertreter: Richly & Ritschel Patentanwälte PartG mbB

(56) Entgegenhaltungen:
- EP-A1- 2 083 052
- WO-A1-2016/042097
- US-A1- 2009 169 762

## Beschreibung

Die vorliegende Erfindung betrifft eine wasserbasierte Tintenzusammensetzung, im Weiteren auch als Tinte bezeichnet, zum Bedrucken von Kunststoffoberflächen, insbesondere von Kunststoffmaterialien, die mit Lebensmitteln in Kontakt gebracht werden sollen. Die erfindungsgemäße Tintenzusammensetzung verzichtet im Wesentlichen auf umweltgefährliche und/oder toxische Inhaltsstoffe und weist eine schnelle Trocknung, eine gute Haftung und eine hohe Kratzfestigkeit auf. Die Erfindung betrifft ebenfalls die Verwendung der erfindungsgemäßen Tinte zum Drucken, sowie mit dieser Tinte bedruckte Kunststoffe.

Der Tintenstrahldruck ist ein dem Fachmann hinlänglich bekanntes Verfahren zum Bedrucken von, beispielsweise, Papiermaterial. Zum Einsatz kommen hierbei bevorzugt sogenannte Dropon-Demand (DOD) Drucker, die das Druckbild durch den gezielten Abschuss von Tintentröpfchen aus dem Druckkopf erzeugen. Beispiel für solche DOD-Drucker sind die Bubble-Jet-Drucker, die Piezo-Drucker oder die Druckventil-Drucker.

Allen DOD-Druckköpfen ist die Eigenschaft gemeinsam, dass sie, bzw. die hierin enthaltene Tine, mit der Zeit eintrocknen, insbesondere, wenn sie nicht genutzt werden. Hierzu gegenläufig soll jedoch eine schnelle Trocknung der Tinte auf dem bedruckten Medium gewährleistet bleiben, um ein Verlaufen/Verwischen der aufgedruckten Tinte möglichst zu vermeiden. Bei dem Bedrucken von Kunststoffoberflächen ist - im Gegensatz zum Bedrucken von Papier - dieser Widerspruch an die Anforderungen an die Tinte teilweise noch verstärkt. Dies ist insbesondere dann der Fall, wenn es sich um glatte Kunststoffoberflächen handelt. Im Stand der Technik, insbesondere der industriellen Verpackungsindustrie werden Kunststoffoberflächen, z.B. Kunststofffolien, daher in der Regel nicht unter Zuhilfenahme von Tintenstrahldruckern bedruckt, sondern im Offsetdruck. Die wenigen bekannten Tintenzusammensetzungen für Tintenstrahldrucker, die gleichzeitig zum Bedrucken von Kunststoffoberflächen geeignet sind enthalten einen relativ hohen Gehalt an umweltgefährlichen Lösungsmittel und/oder teils zumindest umweltgefährlichen, wenn nicht toxischen Zusatzstoffen, welche die Trocknung der Tinte beschleunigen sollen, sobald diese auf die Kunststoffoberfläche aufgedruckt wurde.

Die US 2009/169762 A1 beschreibt eine Tintenzusammensetzung zum Bedrucken von Fotos. Die WO 2016/042097 A1 beschreibt eine Tintenzusammensetzung zum Bedrucken von keramischen Substraten. Die EP 2083 052 A1 beschreibt eine Tintenzusammensetzung aufweisend Aluminiumpigmente.

Dementsprechend besteht der Bedarf für eine Tintenzusammensetzung zum Bedrucken von Kunststoffoberflächen mittels eines Tintenstrahldruckers, bei welcher auf die Verwendung von umweltgefährlichen Substanzen verzichtet wird oder deren Konzentration zumindest deutlich verringert ist.

Diese Aufgabe wird erfindungsgemäß durch die Verwendung einer wasserbasierten Tinte mit den in Anspruch 1 angegebenen Merkmalen gelöst. Weiterhin wird diese Aufgabe durch die Verwendung einer Tinte zum Bedrucken einer Oberfläche aufweisend zumindest einen Kunststoff mit den in Anspruch 12 angegebenen Merkmalen gelöst. Auch ein Kunststoffmaterial nach Anspruch 13, aufweisend zumindest eine Oberfläche, wobei die Oberfläche die erfindungsgemäße Tinte aufweist, ist von der vorliegenden Erfindung umfasst. Vorteilhafte Ausgestaltungen sind in den Unteransprüchen angegeben.

Die erfindungsgemäße wasserbasierte Tinte für Tintenstrahldrucker weist eine schnelle Trocknung und gute Haftung auf Kunststoffoberflächen, sowie eine gute Kratzfestigkeit auf. Gleichzeitig wird auf die Verwendung von umweltgefährlichen und/oder toxischen Substanzen verzichtet oder deren Konzentration in der Tinte zumindest erheblich reduziert.

Im Genaueren handelt es sich bei der erfindungsgemäßen Tinte um eine wasserbasierte Tintenzusammensetzung für Tintenstrahldrucker aufweisend zumindest ein organisches Lösungsmittel, zumindest ein Pigment und zumindest ein Polyacrylat. Die erfindungsgemäße Tinte ist dadurch gekennzeichnet, dass sie eine dynamische Viskosität im Bereich von ≥ 2 und ≤ 20 cP aufweist und zum Bedrucken einer Oberfläche aufweisend zumindest einen Kunststoff geeignet ist.

Wie überraschenderweise gefunden wurde, weist eine Tinte mit diesen Merkmalen hervorragende Trocknungseigenschaften auf der bedruckten Kunststoffoberfläche auf, während gleichzeitig ein Eintrocknen des Druckkopfes des Tintenstrahldruckers wirkungsvoll vermieden bzw. zumindest stark reduziert ist und im Bereich von Tinten liegt, die zum Bedrucken von Papier Verwendung finden.

Die in der Beschreibung der Erfindung angegeben Konzentrationen (in %) entsprechend Gewichtsprozent (Gew.-%) an der Tintenzusammensetzung, solange nicht etwas anderes angegeben ist. Weiterhin wird der Wassergehalt der erfindungsgemäßen Tinten nicht immer explizit angegeben (beispielsweise in den Ansprüchen 7 und 8). Dieser entspricht bevorzugt dem zu 100 % fehlenden Anteil, wobei zu berücksichtigen ist, dass die eingewogenen Inhaltsstoffe der Tintenzusammensetzung (beispielsweise eine Polyacrylat-Emulsion) bereits Wasser enthalten, d.h. durch sie bereits Wasser in die erfindungsgemäßen Tintenzusammensetzungen eingebracht wird.

Mit dem Begriff "wasserbasiert" wird im Sinne der Erfindung eine Tintenzusammensetzung bezeichnet, die Wasser enthält und einen geringen Lösungsmittelanteil aufweist. Bevorzugt liegt der Anteil des in der Tinte enthaltenen Lösungsmittels unterhalb des Anteils des enthaltenen Wassers. Bevorzugter liegt der Anteil des Lösungsmittels in der Tintenzusammensetzung bei ≤ 40 Gew.-% und/oder der Anteil des Wassers in der Tintenzusammensetzung bei > 40 Gew.-%. Noch bevorzugter liegt der Anteil des Lösungsmittels in der Tintenzusammensetzung bei ≤ 30 Gew.-% und/oder der Anteil des Wassers in der Tintenzusammensetzung bei > 50 Gew.-%. Noch bevorzugter liegt der Anteil des Lösungsmittels in der Tintenzusammensetzung bei ≤ 27 Gew.- % und/oder der Anteil des Wassers in der Tintenzusammensetzung bei > 60 Gew.-%. Noch bevorzugter liegt der Anteil des Lösungsmittels in der Tintenzusammensetzung bei ≤ 20 Gew.-% und/oder der Anteil des Wassers in der Tintenzusammensetzung bei > 65 Gew.-%. Noch bevorzugter liegt der Anteil des Lösungsmittels in der Tintenzusammensetzung bei ≤ 15 Gew.-% und/oder der Anteil des Wassers in der Tintenzusammensetzung bei > 70 Gew.-%.

Bevorzugte Bereiche für den Wasseranteil in der erfindungsgemäßen wasserbasierten Tinte liegen bei > 40 Gew.-% und ≤ 90 Gew.-%, bevorzugter > 60 Gew.-% und ≤ 90 Gew.-%, noch bevorzugter bei > 65 Gew.-% und ≤ 87 Gew.-% und am bevorzugtesten > 70 Gew.-% und ≤ 85 Gew.-%.

Die erfindungsgemäßen Tinten enthalten bevorzugt keine umweltgefährlichen und/oder toxischen Inhaltsstoffe oder zumindest lediglich eine geringe Konzentration derselben. Daher können vorteilhafter Weise die erfindungsgemäßen Tinten für das Bedrucken von Kunststoffmaterialien verwendet werden, die mit Lebensmitteln, bevorzugt Nahrungsmitteln, in Kontakt gelangen. Dies ist insbesondere bei bedruckten Kunststoffen in Folienform der Fall, bei denen die Gefahr der Diffusion der umweltgefährlichen und/oder toxischen Inhaltsstoffe von der bedruckten Außenseite durch die Folie zu der mit den Lebensmitteln in Kontakt stehenden Innenseite der Folie besteht.

Bei dem Tintenstrahldrucker kann es sich um jeglichen dem Fachmann bekannten Tintenstrahldrucker handeln. Bevorzugt handelt es sich bei dem Tintenstrahldrucker um einen Drop-on-Demand (DOD) Drucker, noch bevorzugter ist der DOD Drucker ausgewählt aus der Gruppe bestehend aus Bubble-Jet-Drucker, Piezo-Drucker und Druckventil-Drucker. Ein BubbleJet-Drucker kann Tintentropfen mit Hilfe eines Heizelements erzeugen, welches das Wasser und/oder das Lösungsmittel in der Tinte erhitzt. Dabei bildet sich explosionsartig eine winzige Dampfblase, die durch ihren Druck einen Tintentropfen aus der Düse presst. Ein Piezo-Drucker kann den inversen Piezoelektrischen Effekt zum Pressen der Drucktinte durch eine feine Düse nutzen, wobei sich Keramikelemente unter elektrischer Spannung verformen. Die Tinte bildet Tropfen, deren Volumen sich über die Größe des angelegten elektrischen Impulses steuern lässt. Bei den Druckventil-Druckern sind einzelne Ventile an den Düsen angebracht, die sich öffnen, wenn ein Tropfen die Düse verlassen soll. Am bevorzugtesten handelt es sich bei dem Tintenstrahldrucker um einen Piezo-Drucker, d.h. einen Piezo-Tintenstrahldrucker, bzw. einen Tintenstrahldrucker mit Piezo-Druckkopf.

Die erfindungsgemäße Tinte umfasst zumindest ein organisches Lösungsmittel. Dieses ist bevorzugt ein Feuchthaltemittel und unterstützt so die Vermeidung des Eintrocknen des Druckkopfes. Bevorzugt weist das organische Lösungsmittel zumindest zwei alkoholische Hydroxygruppen (-OH) auf, d.h. es ist zwei-, drei-, vier- oder mehrwertiger Alkohol.

Weiter bevorzugt ist das organische Lösungsmittel ausgewählt aus der Gruppe bestehend aus einem zweiwertigen Alkohol, einem dreiwertigen Alkohol, einem Alditol (Zuckeralkohol), einem Lactam, 2-Pyrrolidon, 1-Methyl-2-Pyrrolidon, 1-Methyl-2-Piperidon, γ-Butyrolacton, einem Sulfon, N-Ethylacetamid, N-Methylpropionamid, N-Acetylethanolamin, N-Methylacetamid, Formamid, Tetramethylsulfon, Butadiensulfon, Ethylencarbonat, Tetrahydrofurfurylalkohol und Glycereth-26 (26 mol Ethoxylat des Glycerins. Das bevorzugteste organische Lösungsmittel ist Glycerin. Glycerin kann als alleiniges organisches Lösungsmittel oder zusammen mit einem oder mehreren weiteren organischen Lösungsmitteln eingesetzt werden.

Besonders bevorzugte zweiwertige Alkohole sind die Glykole. Der zweiwertige Alkohol ist noch bevorzugter ausgewählt aus der Gruppe bestehend aus 1,2-Propandiol, 3,3-Thiodipropanol, 3-Amino-1,2-Propandiol, 1,2-Butandiol, 1,3-Butandiol, 1,4-Butandiol, 2,3-Butandiol, Pantothenol, 1,4-Cyclohexandimethanol, 1,5-Pentandiol, 1,6-Hexandiol, 1,8-Oktandiol, Diethylenglycol, Triethylenglycol, Tetraethylenglycol, Dipropylenglycol, Polyethylenglycol, und Polypropylenglycol.

Polyethylenglycol ist ganz besonders bevorzugt. Weiter bevorzugt weist das Polyethylenglycol ein durchschnittliches Molekulargewicht im Bereich von ≥ 200 und ≤ 2000 auf. Beispielsweise und bevorzugt weist das Polyethylenglycol ein durchschnittliches Molekulargewicht von ungefähr 200, 300, 400, 600, 900, 1000, 1500 oder 2000 auf. Noch bevorzugter weist das durchschnittliches Molekulargewicht im Bereich von ≥ 200 und ≤ 1000 auf. Beispielsweise und bevorzugt weist das Polyethylenglycol ein durchschnittliches Molekulargewicht von ungefähr 200, 300, 400, 600, 900 oder 1000 auf.

Bevorzugte dreiwertige Alkohole sind Glycerin, 1,2,6-Hexantriol, 1,2,4-Butentriol, Trimethylpropan. Glycerin und 1,2,6-Hexantriol sind ganz besonders bevorzugt.

Ein besonders bevorzugtes Alditol ist Sorbitol.

Die erfindungsgemäßen organischen Lösungsmittel sind ganz besonders bevorzugt ausgewählt aus der Gruppe bestehend aus einem Ethylenglycol, bevorzugt einem Polyethylenglycol oder einem Diethylenglycol, Glycerin, einem Diol und Mischungen davon. Allen dreien ist gemeinsam, dass diese vorteilhafter Weise eine gute Löslichkeit in Wasser, aufweisen, dass sie hygroskopisch sind und damit als Feuchthaltemittel dienen können, die ein Eintrocknen des Druckkopfes verhindern und, dass sie nicht umweltgefährlich, bevorzugt nicht-toxisch, sind. Ethylenglycole sind weiterhin biologisch abbaubar. Dies gilt insbesondere für Polyethylenglycol mit einem durchschnittliches Molekulargewicht im Bereich von ≥ 200 und ≤ 1000, weswegen dieses ganz besonders bevorzugt wird. Insbesondere Polyethylenglycol 200 wird besonders bevorzugt.

Das organische Lösungsmittel kann bevorzugt eine Mischung organischer Lösungsmittel sein. Weiter bevorzugt enthält die erfindungsgemäße Tintenzusammensetzung als organisches Lösungsmittel eine Mischung aus zumindest zwei, zumindest drei und am bevorzugtesten drei der zuvor aufgeführten unterschiedlichen organischen Lösungsmittel.

Eine ganz besonders bevorzugte Mischung für das organische Lösungsmittel besteht hierbei aus zumindest zwei der zuvor genannten organischen Lösungsmittel und enthält Glycerin oder ein Diol. Noch bevorzugter besteht die Mischung für das organische Lösungsmittel aus zumindest zwei der zuvor genannten organischen Lösungsmittel und enthält Glycerin und ein Diol. Weiter bevorzugt liegen das Glycerin und das Diol in einem Verhältnis von 3:2 vor. Das Diol ist ganz besonders bevorzugt 1,2-Pentandiol, 1,3-Butandiol oder 1,2-Propandiol, am bevorzugtesten 1,2-Pentandiol.

Eine ganz besonders bevorzugte Mischung für das organische Lösungsmittel besteht hierbei aus zumindest drei der zuvor genannten organischen Lösungsmittel und enthält Glycerin, ein Diol, welches bevorzugt 1,2-Pentandiol ist, und ein Ethylenglykol, welches bevorzugt Diethylenglycol, Polyethylenglycol oder PEG200 ist. Weiter bevorzugt liegen das Glycerin, das Diol und das Ethylenglycol in einem Verhältnis von 3:2:1 vor.

Weiter bevorzugt enthält die erfindungsgemäße Tintenzusammensetzung das organische Lösemittel in einer Konzentration von ≥ 6 Gew.-% und ≤ 40 Gew.-%, bevorzugter ≥ 6 Gew.-% und ≤ 30 Gew.-%, noch bevorzugter ≥ 6 Gew.-% und ≤ 27 Gew.-%, noch bevorzugter ≥ 6 Gew.-% und ≤ 20 Gew.-%, und am bevorzugtesten ≥ 11 Gew.-% und ≤ 15 Gew.-%. Es wurde überraschenderweise gefunden, dass unter Einhaltung dieser Konzentrationsbereiche eine besonders gute Trocknung der Tinte auf der Kunststoffoberfläche erreicht werden konnte, ohne, dass es zum Eintrocknen des Druckkopfes auch bei längeren Standzeiten ohne Benutzung kam.

Die erfindungsgemäße Tinte umfasst weiterhin zumindest ein Pigment. Unter einem Pigment soll jegliches Farbmittel verstanden werden, welches für den Tintenstrahldruck geeignet ist. Dem Fachmann sind solche Farbmittel geläufig.

Bevorzugt handelt es sich bei dem Pigment um Pigmentpartikel. Ebenfalls bevorzugt handelt es sich bei dem Pigment um ein unlösliches Farbmittel. In anderen Worten liegt das Pigment bevorzugt ungelöst in der erfindungsgemäßen Tinte vor.

Bei dem Pigment kann es sich um ein organisches oder ein anorganisches Pigment handeln.

Bevorzugt ist das anorganische Pigment ein synthetisch hergestelltes anorganisches Pigment. Weiter bevorzugt ist das anorganische Pigment ausgewählt aus der Gruppe bestehend aus Titandioxid, Ruß, Bismutpigmente, Oxide, Hydroxid, Eisencyanblau, Ultramarin, Cadmiumpigmente, Quinacridon, Azo-Pigment, Phythalocyanin und Chromatpigmente. Bei den Oxiden und Hydriden handelt es sich weiter bevorzugt um Eisenoxidpigmente, Chromoxid und Mischphasenoxidpigmente, wie Rinmans Grün. Bei den Chromatpigmente handelt es sich bevorzugt um Chromgelb, Chromgrün und Molybdate.

Bevorzugt ist das organische Pigment ein synthetisch hergestelltes oder nicht-synthetisch hergestelltes organisches Pigment. Besonders bevorzugt ist das synthetische organische Pigment ein Azopigment, weiter bevorzugt Monoazo- oder Diazopigment, oder ein polycyclisches Pigment.

Eine besonders bevorzugte Gruppe von Pigmenten sind Ruß, Quinacridon-Pigment, Azo-Pigment und Phythalcyanin.

Bevorzugt weist das Pigment eine Partikelgröße (D90) von ≤ 1 µm, bevorzugter ≤ 750 nm oder ≤ 550 nm, noch bevorzugter ≤ 600 nm und am bevorzugtesten ≤ 400 nm auf. Solche Partikelgrößen führen vorteilhafter Weise zu einer besonders homogenen Tintenzusammensetzung in der die Pigmente stabil dispergiert vorliegen. Weiterhin wird ein scharfes Druckbild erreicht und einer Verstopfung des Druckkopfes vorgebeugt. Die Bestimmung der Partikelgröße kann beispielsweise mittels der Laserbeugung, insbesondere der dynamischen Laserdiffraktometrie erfolgen. Der angegebene Durchmesser gibt jeweils die Prozentzahl der Partikel (90 %) an, die kleiner als der angegebene Wert sind (z.B. D90 - 90% der Partikel sind kleiner als 1 µm). Das Pigment weist weiter bevorzugt einen median peak im Bereich von ≥ 50 nm und ≤ 200 nm auf, bevorzugt etwa 150 nm auf.

Bevorzugt enthält die erfindungsgemäße Tinte das Pigment in einer Konzentration von ≥ 1 Gew.-% und ≤ 15 Gew.-%, bevorzugt ≥ 3 Gew.-% und ≤ 12 Gew.-%, bevorzugter von ≥ 3 Gew.-% und ≤ 8 Gew.-%, bevorzugter von ≥ 3 Gew.-% und ≤ 6 Gew.-%. Die angegebenen Gew.-% beziehen sich hierbei auf den Festkörperanteil des Pigments in der erfindungsgemäßen Tintenzusammensetzung.

Die erfindungsgemäße Tintenzusammensetzung umfasst weiterhin zumindest ein Polyacrylat. Vorteilhafter Weise führte die Verwendung von Polyacrylaten zu einer verbesserten Haftung der Tinte auf Kunststoffoberflächen. Das Polyacrylat ist bevorzugt ein Dispergiermittel. Polyacrylate (Polyacrylsäureester) sind aus Estern der Acrylsäure (Acrylsäureester) hergestellte Polymere. Sie sind Kunststoffe und sie können über radikalische Kettenpolymerisation in wässrigen Lösungen, bevorzugt Emulsionen (Emulsionspolymerisation) oder durch Substanzpolymerisation mit einem Endprodukt als Pulver hergestellt werden.

Bevorzugt handelt es sich bei dem Polyacrylat um ein wässriges Emulsionspolymer oder ein wässriges Dispersionspolymer. Hierdurch wird vorteilhafter Weise eine besonders stabile Tintenzusammensetzung gewährleistet.

Bei dem Polyacrylat handelt es sich bevorzugt um solche Verbindungen, deren Molgewicht ≥ 10.000 g/mol ist und bevorzugter im Bereich von ≥ 10.000 bis ≤ 1.000.000 g/mol liegt, noch bevorzugter ≥ 10.000 bis ≤ 200.000 g/mol. Besonders bevorzugt werden Polyacrylate mit einem Molgewicht von ≥ 10.000 und ≤ 45.000 g/mol, bevorzugt ≥ 25.000 und ≤ 35.000 g/mol.

Noch bevorzugter handelt es sich bei dem Polyacrylat um ein Polyacrylat-Copolymer, weiter bevorzugt ein Blockcopolymer. Weiter bevorzugt sind die weiteren Monomereinheiten des Polyacrylat-Copolymer ausgewählt aus der Gruppe bestehend aus Methacrylsäure, Methylmethacrylat, Butylacrylat, Acrylamid, Styrol, Acrylnitril, Vinylacetat, Vinylakohol und Urethan.

Die Glasübergangstemperatur (Tg) des Polyacrylats liegt bevorzugt im Bereich von ≥ -50°C und ≤ 150°C, bevorzugter im Bereich von ≥ -40°C und ≤ 120°C, noch bevorzugter im Bereich von ≥ -35°C und ≤ 110°C, am bevorzugtesten im Bereich von ≥ - 35°C und ≤ 105°C.

Beispielhafte und besonders geeignete Polyacrylat sind Joncryl 1665, Tg = 42° C (BASF) oder Eurocryl 4161 XP, Tg = 102° C (EOC) .

Das Polyacrylat ist bevorzugt in einer Konzentration im Bereich von ≥ 1,5 und ≤ 20 Gew.-% in der erfindungsgemäßen Tintenzusammensetzung enthalten. Noch bevorzugter ist das Polyacrylat in einer Konzentration im Bereich von ≥ 1,5 und ≤ 15 Gew.-% oder im Bereich von ≥ 1,5 und ≤ 10 Gew.-% in der erfindungsgemäßen Tintenzusammensetzung enthalten. Ganz besonders bevorzugt ist das Polyacrylat in einer Konzentration im Bereich von ≥ 1,5 und ≤ 8 Gew.-%, im Bereich von ≥ 1,5 und ≤ 6 Gew.-% oder im Bereich von ≥ 1,8 und ≤ 4 Gew.-% in der erfindungsgemäßen Tintenzusammensetzung enthalten. Diese Bereiche zeigten eine deutliche Verbesserung der Trocknungscharakteristik der Tinte auf Kunststoffoberfläche ohne jedoch zu einer Eintrocknung des Druckkopfes zu führen. Die angegebenen Gew.-% beziehen sich auf den Festkörperanteil des Polyacrylats in der erfindungsgemäßen Tintenzusammensetzung.

Die erfindungsgemäße Tintenzusammensetzung weist weiterhin eine dynamische Viskosität bei 25 °C im Bereich von ≥ 2 und ≤ 20 cP (mPas), bevorzugt ≥ 2 und ≤ 15 cP oder ≥ 2 und ≤ 10 cP auf. Solche Viskositätsbereiche führten vorteilhafter Weise zu einem besonders scharfen Druckbild auf der zu bedruckenden Kunststoffoberfläche.

Die dynamische Viskosität (η) kann auch als Scherviskosität bezeichnet werden und mittels eines Viskosimeters oder eines Rheometers bestimmt werden. Die Viskosität kann nach ISO 2555:1989 bestimmt werden.

Ganz besonders bevorzugt weist die erfindungsgemäße wässrige Tintenzusammensetzung ≥ 6 Gew.-% und ≤ 20 Gew.-% eines organischen Lösungsmittels aus gewählt aus Glycerin, einem Diol und/oder einem Ethylenglycol, ≥ 3 Gew.-% und ≤ 12 Gew.-%, eines Pigments, sowie ≥ 2 und ≤ 20 Gew.-% eines Polyacrylat-Copolymers, welches ein wässriges Emulsionspolymer ist, auf. Hierbei handelt es sich bei dem Diol bevorzugt um 1,2-Pentandiol oder 1,3-Butandiol und/oder bei dem Ethylenglykol bevorzugt um Diethylenglycol oder Polyethylenglycol.

Noch weiter bevorzugt weist die erfindungsgemäße wässrige Tintenzusammensetzung ≥ 11 Gew.-% und ≤ 15 Gew.-% eines organischen Lösungsmittels aus gewählt aus Glycerin, einem Diol und/oder einem Ethylenglycol, ≥ 3 Gew.-% und ≤ 12 Gew.-%, eines Pigments, sowie ≥ 2 und ≤ 15 Gew.-% eines Polyacrylat-Copolymers, welches ein wässriges Emulsionspolymer ist, auf. Hierbei handelt es sich bei dem Diol bevorzugt um 1,2-Pentandiol oder 1,3-Butandiol und/oder bei dem Ethylenglykol bevorzugt um Diethylenglycol oder Polyethylenglycol.

Die erfindungsgemäße Tintenzusammensetzung weist weiter bevorzugt eine statische Oberflächenspannung von ≤ 40 mN/m auf. Hierdurch wird vorteilhafter Weise das Bedrucken von Kunststoffoberflächen, insbesondere glatten, d.h. nicht-porösen Oberflächen erleichtert.

Durch die erfindungsgemäße Oberflächenspannung kommt es zu einer gleichmäßigen Benetzung der bedruckten Oberfläche. Die statische Oberflächenspannung liegt bei 25° C bevorzugter in einem Bereich von ≥ 20 und ≤ 40 mN/m, noch bevorzugter ≥ 25 und ≤ 35 mN/m und am bevorzugtesten ≥ 28 und ≤ 30 mN/m. Die statische Oberflächenspannung der Tintenzusammensetzung kann beispielsweise gemessen werden mittels der Wilhelmy-Plättchenmethode, der Du-Noüy-Ringmethode, mit einem Tensiometer oder der Methode des hängenden Tropfens. Die Oberflächenspannung kann ebenfalls nach DIN EN 14370:2004-11 bestimmt werden.

Die erfindungsgemäße Tintenzusammensetzung ist weiterhin zum Bedrucken einer Oberfläche aufweisend zumindest einen Kunststoff geeignet. Das Bedrucken erfolgt hierbei bevorzugt mittels eines Tintenstrahldruckers, noch bevorzugter mittels eines Piezo-Tintenstrahldruckers.

Die zu bedruckende Oberfläche weist zumindest einen Kunststoff auf. Bevorzugt ist die Oberfläche die Oberfläche zumindest eines Kunststoffmaterials. Das Kunststoffmaterial kann aus einem oder mehreren Kunststoffen bestehen oder einen oder mehrere Kunststoffe aufweisen.

Bevorzugt handelt es sich bei dem Kunststoff bzw. dem Kunststoffmaterial um ein Polyolefin, noch bevorzugter um einen Kunststoff ausgewählt aus der Gruppe bestehend aus Low Density Polyethylen (LDPE), Polypropylen, orientiertes Polyporopylen (OPP), Polyester und Polyethylenterephthalat (PET). Diese Kunststoffe haben - unter anderem - den Vorteil, dass sie für Verpackungen von Nahrungsmitteln geeignet sind und beispielsweise gute Barriereeigenschaften für Sauerstoff aufweisen. Noch bevorzugter handelt es sich bei dem Kunststoffmaterial um eine Verpackung von Lebensmitteln, bevorzugt Nahrungsmitteln. Vorteilhafter Weise enthalten die erfindungsgemäßen Tinten keine oder nur geringe Mengen an umweltgefährlichen und/oder toxischen Inhaltsstoffen. Daher kann eine sichere Verpackung von Lebensmitteln gewährleistet werden.

Die erfindungsgemäße Tinte ist bevorzugt geeignet für den direkten oder - noch bevorzugter - indirekten Kontakt mit Lebensmitteln. Unter einem indirekten Kontakt soll hierbei verstanden werden, dass die erfindungsgemäße Tinte auf der Außenseite einer Lebensmittelverpackung oder eines Kunststoffmaterials für die späterer Herstellung einer Lebensmittelverpackung angebracht wird, während die Innenseite der Lebensmittelverpackung mit dem Lebensmittel in direktem Kontakt steht. Durch die zumindest verringerte Konzentration an umweltgefährlichen bzw. toxischen Inhaltsstoffen in der Erfindungsgemäßen Tinte besteht somit auch bei Diffusion derselben durch die Lebensmittelverpackung hindurch keine Gefahr der Kontamination der enthaltenen Lebensmittel.

Weiter bevorzugt handelt es sich bei dem Kunststoffmaterial, auf dessen Oberfläche die erfindungsgemäße Tinte gedruckt wird, um ein flächiges und/oder folienförmiges Material, ganz besonders bevorzugt eine Kunststofffolie. Noch bevorzugter handelt es sich bei dem Kunststoffmaterial um ein Kunststoffmaterial für die Verpackung von Lebensmitteln, bevorzugt Nahrungsmitteln. In anderen Worten ist die erfindungsgemäße Tintenzusammensetzung zum Bedrucken einer Lebensmittel-, bevorzugt Nahrungsmittelverpackung geeignet.

Bei der Oberfläche handelt es sich bevorzugt um eine nichtporöse Oberfläche und/oder die äußere Oberfläche einer Lebensmittelverpackung. In anderen Worten ist die Oberfläche eine glatte Oberfläche. Vorteilhafter Weise haftet die erfindungsgemäße Tinte ausreichend gut an solchen glatten Oberflächen und trocknet zudem ausreichend schnell, um ein sauberes Druckbild und eine hohe und schnelle Wischfestigkeit zu erreichen.

Bei der Oberfläche handelt es sich bevorzugt um eine vorbehandelte Oberfläche. Hierdurch wird vorteilhafter Weise die Haftung der Tinte an der Oberfläche verbessert. Besonders bevorzugte Oberflächenbehandlungen schließen chemische und physikalische Verfahren ein. Weiter bevorzugt handelt es sich bei der Vorverhandlung um eine Coronavorbehandlung, eine Flammenvorbehandlung, eine Plasmavorbehandlung oder eine Primervorbehandlung. Die Coronavorbehandlung ist ganz besonders bevorzugt.

In einer weiteren bevorzugten Fortbildung der Erfindung weist die Tintenzusammensetzung zusätzlich zumindest ein Polyurethan und/oder zumindest ein selbst-kreuzvernetzendes (*self-crosslinking*) Polyacrylat auf. Das selbst-kreuzvernetzende Polyacrylat soll vorliegend als unterschiedlich zu dem immer in der erfindungsgemäßen Tintenzusammensetzung enthaltenen Polyacrylat angesehen werden. In anderen Worten handelt es sich bei dem selbst-kreuzvernetzenden Polyacrylat um ein von dem Polyacrylat unterschiedliches Polyacrylat. Selbst-kreuzvernetzende Polyacrylate können auch als selbstvernetzende Polyacrylate bezeichnet werden und sind dem Fachmann hinlänglich bekannt. Das selbst-kreuzvernetzendes Polyacrylat ist besonders bevorzugt ein Polyacrylat-Copolymer. Ebenfalls bevorzugt handelt es sich bei dem selbst-kreuzvernetzenden Polyacrylat um ein Core-Shell-Copolymer.

Durch die Anwesenheit eines Polyurethans und/oder eines selbst-kreuzvernetzenden Polyacrylats wird vorteilhafter Weise eine schnellere Trocknung der auf die Kunststoffoberfläche gedruckten Tinte erreicht. Besonders bevorzugt handelt es sich bei dem selbst-kreuzvernetzenden Polyacrylat-Copolymer um ein wässriges Emulsionspolymer. Exemplarische und bevorzugte selbst-kreuzvernetzende Polyacrylat-Copolymere sind DSV.4209, Tg = 25° C (Vanora AG) oder Eurocryl 4150 XP, Tg = -35° C (EOC Group). Ein exemplarisches und bevorzugtes Polyurethan ist U199 (Alberdingk Boley).

Besonders bevorzugt liegt die Konzentration des Polyurethan und/oder des selbst-kreuzvernetzenden Polyacrylats in einem Bereich von ≥ 1 und ≤ 8 Gew.-%, besonders bevorzugt in einem Bereich von ≥ 2 und ≤ 6 Gew.-% und noch bevorzugter in einem Bereich von ≥ 3 und ≤ 5 Gew.-%. Die angegebenen Gew.-% beziehen sich auf den Festkörperanteil des selbst-kreuzvernetzenden Polyacrylats bzw. des Polyurethans in der erfindungsgemäßen Tintenzusammensetzung.

In einer weiteren bevorzugten Fortbildung der Erfindung weist die Tintenzusammensetzung zusätzlich zumindest ein Wachs auf. Vorteilhafter Weise führt das zusätzliche Wachs zu einer erhöhten Kratzfestigkeit der Tintenzusammensetzung. Dies gilt besonders bevorzugt bei glatten Oberflächen.

Als Wachs kann jedes dem Fachmann bekannte und geeignete Wachs Verwendung finden. Besonders bevorzugt ist das Wachs ein Wachs auf Polyolefinbasis. Weiter bevorzugt ist das Wachs ausgewählt aus der Gruppe bestehend aus einem LDPE-Wachs, einem HDPE-Wachs und einem Carnaubawachs. Ein LDPE-Wachs ist ganz besonders bevorzugt, da hiermit vorteilhafter Weise eine besonders hohe Kratzfestigkeit und eine Haftung auf glatten Oberflächen erzielt wird. Exemplarische und bevorzugte Wachse sind die HDPE-Wachse Aquacer 513 (Byk) oder Aquacer 552 (Byk).

Das Wachs ist bevorzugt in einer Konzentration von ≤ 5 Gew.- %, noch bevorzugter ≤ 3 Gew.-% in der erfindungsgemäßen Tintenzusammensetzung enthalten. Ganz besonders bevorzugt ist das Wachs in einer Konzentration im Bereich von ≥ 0,5 und ≤ 3 Gew.-%, noch bevorzugter ≥ 0,7 und ≤ 3 Gew.-% in der erfindungsgemäßen Tintenzusammensetzung enthalten. Die angegebenen Gew.-% beziehen sich auf den Festkörperanteil des Wachses in der erfindungsgemäßen Tintenzusammensetzung.

In einer weiteren bevorzugten Fortbildung der Erfindung weist die Tintenzusammensetzung zumindest ein Tensid, zumindest eine Base und/oder zumindest einen Entschäumer auf.

Mittels des Tensids kann vorteilhafter Weise die Oberflächenspannung der erfindungsgemäßen Tintenzusammensetzung reguliert werden. Geeignete Tenside umfassen beispielsweise und bevorzugt silikonbasierte Tenside oder polyethermodifiziertes Siloxan, das besonders bevorzugt ist. Beispielhafte und besonders bevorzugte Tenside sind Byk 348 (Byk) sowie Surfynol 104E (Evonik).

Besonders bevorzugt weist die Tintenzusammensetzung eine Konzentration von < 3 Gew.-%, < 1,5 Gew.-%, < 0,4 Gew.-%, bevorzugt ≤ 0,2 Gew.-% zumindest eines Tensids, bevorzugter eines polyethermodifizierten Siloxans auf. Die angegebenen Gew.-% beziehen sich auf den Festkörperanteil des Tensids in der erfindungsgemäßen Tintenzusammensetzung.

Mittels der Base kann vorteilhafter Weise der Trocknungsprozess der erfindungsgemäßen Tinte nach dem Drucken auf die Kunststoffoberfläche beeinflusst werden. Geeignete Basen umfassen beispielsweise und bevorzugt Ammonium-Lösungen, bevorzugter Triethylamin, Triethanolamin und Dimethylathanolamin.

Besonders bevorzugt weist die Tintenzusammensetzung eine Konzentration von < 1 Gew.-% zumindest einer Base, bevorzugter 0,4 Gew.-% einer Base auf.

Mittels des Entschäumers kann vorteilhafter Weise der Druckvorgang sowie die Herstellung der erfindungsgemäßen Tinte verbessert werden. Geeignete Entschäumer umfassen beispielsweise und bevorzugt einen Silikon-Entschäumer oder einen Polymer-Entschäumer.

Besonders bevorzugt weist die Tintenzusammensetzung eine Konzentration von < 1 Gew.-% zumindest eines Entschäumers, bevorzugter < 0,2 Gew.-% eines Entschäumers auf. Die angegebenen Gew.-% beziehen sich auf den Festkörperanteil des Entschäumers in der erfindungsgemäßen Tintenzusammensetzung.

Die vorliegende Erfindung betrifft ebenfalls die Verwendung der erfindungsgemäßen wasserbasierten Tintenzusammensetzung mit einem Tintenstrahldrucker zum Bedrucken einer Oberfläche aufweisend zumindest einen Kunststoff.

Im Weiteren werden lediglich einige besonders bevorzugte Verwendungsformen beschrieben, obgleich sämtliche zuvor beschriebene Merkmale und Merkmalskombinationen ebenfalls erfasst sind.

Besonders bevorzugt betrifft die erfindungsgemäße Verwendung das Bedrucken der Oberfläche eines Kunststoffmaterials, noch bevorzugter eines folienförmigen und/oder flächigen Kunststoffmaterials, beispielsweise einer Kunststofffolie. Noch bevorzugter handelt es sich bei dem Kunststoffmaterial um Verpackungsmaterials für das Verpacken von Lebensmitteln, bevorzugt Nahrungsmitteln. Weiter bevorzugt handelt es sich bei der bedruckten Oberfläche um die äußere Oberfläche des Verpackungsmaterials für Lebensmittel.

Ganz besonders bevorzugt betrifft die Verwendung das Bedrucken einer Oberfläche von Kunststoffmaterial ausgewählt aus Low Density Polyethylen (LDPE), orientiertes Polyporopylen (OPP) und Polyethylenterephthalat (PET).

Die vorliegende Erfindung betrifft ebenfalls ein Kunststoffmaterial, aufweisend zumindest eine Oberfläche, wobei die Oberfläche die erfindungsgemäße Tintenzusammensetzung aufweist. Bevorzugt betrifft die vorliegende Erfindung ebenfalls ein Kunststoffmaterial, aufweisend zumindest eine Oberfläche, wobei die Oberfläche die erfindungsgemäße Tintenzusammensetzung aufweist, wobei die Tintenzusammensetzung im Wesentlichen lediglich aus den nichtflüchtigen Festkörperanteilen der ursprünglichen Tintenzusammensetzung besteht. In anderen Worten, sind die flüchtigen Substanzen der Tintenzusammensetzung (Lösungsmittel und Wasser) verdunstet. Weiter bevorzugt wurde die erfindungsgemäße Tintenzusammensetzung mittels eines Tintenstrahldruckers auf die Oberfläche des Kunststoffmaterials aufgebracht.

Im Weiteren werden lediglich einige besonders bevorzugte Ausführungsformen beschrieben, obgleich sämtliche zuvor beschriebene Merkmale und Merkmalskombinationen ebenfalls erfasst sind.

Besonders bevorzugt ist das die erfindungsgemäße Tintenzusammensetzung aufweisende Kunststoffmaterial für die Verpackung von Lebensmitteln, insbesondere Nahrungsmitteln, geeignet. Weiter bevorzugt handelt es sich um eine Folie, eine Tüte, einen Beutel, eine Verpackung oder eine Dose. Besonders bevorzugt ist eine Folie und/oder eine aus Folie bestehende Tüte.

Ebenfalls besonders bevorzugt ist die Oberfläche die äußere Oberfläche einer Lebensmittelverpackung, weiter bevorzugt einer Tüte oder eines Beutels.

Das Kunststoffmaterial umfasst weiter bevorzugt zumindest einen Kunststoff ausgewählt aus Low Density Polyethylen (LDPE), orientiertes Polyporopylen (OPP), Polyethylenterephthalat (PET), Polyvinylchlorid (PVC), Acrylnitril-Butadien-Styrol-Copolymer (ABS), ABS-TCU. Weiter bevorzugt umfasst das Kunststoffmaterial einen Kunststoff ausgewählt aus Low Density Polyethylen (LDPE), orientiertes Polyporopylen (OPP), und Polyethylenterephthalat (PET). Noch weiter bevorzugt besteht das Kunststoffmaterial aus einem Kunststoff ausgewählt aus Low Density Polyethylen (LDPE), orientiertes Polyporopylen (OPP), Polyethylenterephthalat (PET), Polyvinylchlorid (PVC), Acrylnitril-Butadien-Styrol-Copolymer (ABS), ABS-TCU. Noch weiter bevorzugt besteht das Kunststoffmaterial aus einem Kunststoff ausgewählt aus Low Density Polyethylen (LDPE), orientiertes Polyporopylen (OPP) und Polyethylenterephthalat (PET).

Im Folgenden werden einige exemplarische und bevorzugte Tintenzusammensetzungen gemäß der vorliegenden Erfindung beschriebene. Es wird dabei auf die angehängten Abbildungen verwiesen, welche die Tintenzusammensetzungen tabellarisch auflistet. Hierbei gibt die dritte Spalte (Anteil) die Gew.-% des jeweiligen Inhaltstoffes an der Tintenzusammensetzung an. Die vierte Spalte (aktive Substanz in der Lösung) gibt die Gew.-% der aktiven Substanz, bzw. des Festkörpers in dem eingebrachten Inhaltsstoff an. Die fünfte Spalte (Festkörper in der Tintenzusammensetzung) gibt die Gew.-% der Festkörper des jeweiligen Inhaltsstoffes in der resultierenden, erfindungsgemäßen Tintenzusammensetzung an. Beispielsweise enthält die Pigmentzusammensetzung Cabot Cab-o-jet 400 15% aktiver Substanz, d.h. der eigentlichen Pigmentpartikel bzw. Festkörper. Die Menge der Pigmentzusammensetzung an der gesamten Tintenzusammensetzung beträgt 33,33%. Dementsprechend wurden die 15% der Festkörper der Pigmentzusammensetzung verdünnt und die gesamte Tintenzusammensetzung enthält 1/3 der 15%, d.h. 5% der Pigmentfestkörper.

Die in den Beispielen aufgeführten Inhaltsstoffe und deren Konzentrationen sind nicht als beschränkend anzusehen.

### Tinte 1

Bei Tinte 1 handelt es sich um eine wässrige Tintenzusammensetzung, bei der ein Polyacrylat verwendet wurde. Weiterhin kam als organisches Lösungsmittel eine Kombination von Glycerin, 1,2-Pentandiol und PEG 200 zum Einsatz.

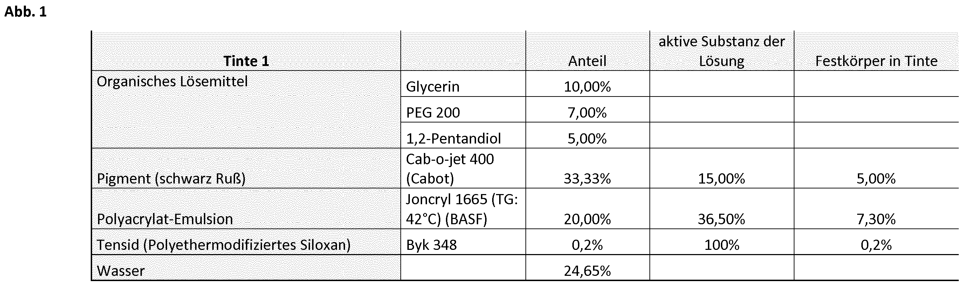

Die wässrige Tintenzusammensetzung enthielt die der Abb. 1 zu entnehmenden Inhaltsstoffe.

Die Tintenzusammensetzung Tinte 1 wies einen Wassergehalt von 65,68 Gew.-% auf.

Tinte 1 zeigte hervorragende Trocknungseigenschaften, bzw. eine gute Wischfestigkeit auf Kunststoffoberflächen. Hierbei kam es jedoch auch nach längeren Standzeiten nicht zu einem Eintrocknen des Piezo-Druckkopfes.

### Tinte 2

Bei Tinte 2 handelt es sich um eine wässrige Tintenzusammensetzung, bei der ein Polyacrylat und ein selbst-kreuzvernetzendes Polyacrylat verwendet wurde. Weiterhin kam als organisches Lösungsmittel eine Kombination von Glycerin, 1,2-Pentandiol und Diethylenglykol zum Einsatz.

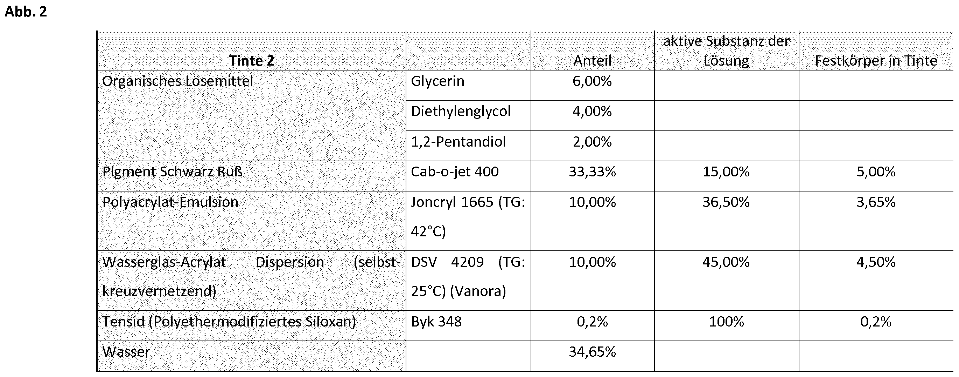

Die wässrige Tintenzusammensetzung enthielt die der Abb. 2 zu entnehmenden Inhaltsstoffe.

Die Tintenzusammensetzung Tinte 2 wies einen Wassergehalt von 74,83 Gew.-% auf.

Tinte 2 zeigte ebenfalls hervorragende Trocknungseigenschaften, bzw. eine gute Wischfestigkeit auf Kunststoffoberflächen. Hierbei kam es erneut auch nach längeren Standzeiten nicht zu einem Eintrocknen des Piezo-Druckkopfes.

### Tinte 3

Bei Tinte 3 handelt es sich um eine wässrige Tintenzusammensetzung, bei der ein Polyacrylat und ein Polyurethan verwendet wurde. Weiterhin kam als organisches Lösungsmittel eine Kombination von Glycerin, 1,2-Pentandiol und Diethylenglykol zum Einsatz.

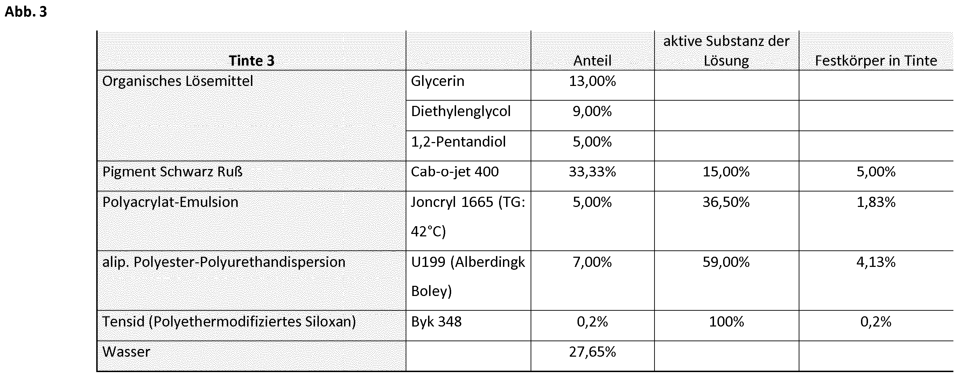

Die wässrige Tintenzusammensetzung enthielt die der Abb. 3 zu entnehmenden Inhaltsstoffe.

Die Tintenzusammensetzung Tinte 3 wies einen Wassergehalt von 62,03 Gew.-% auf.

Tinte 3 zeigte ebenfalls hervorragende Trocknungseigenschaften, bzw. eine gute Wischfestigkeit auf Kunststoffoberflächen. Hierbei kam es erneut auch nach längeren Standzeiten nicht zu einem Eintrocknen des Piezo-Druckkopfes. Weiterhin zeigte die Tinte eine besonders gute Haftung auf Kunststoffoberflächen, insbesondere auf PET-Oberflächen.

### Tinte 4

Bei Tinte 4 handelt es sich um eine wässrige Tintenzusammensetzung, bei der ein Polyacrylat, ein Polyurethan und ein HDPE-Wachs verwendet wurde. Weiterhin kam als organisches Lösungsmittel eine Kombination von Glycerin, 1,3-Butandiol und Diethylenglykol zum Einsatz.

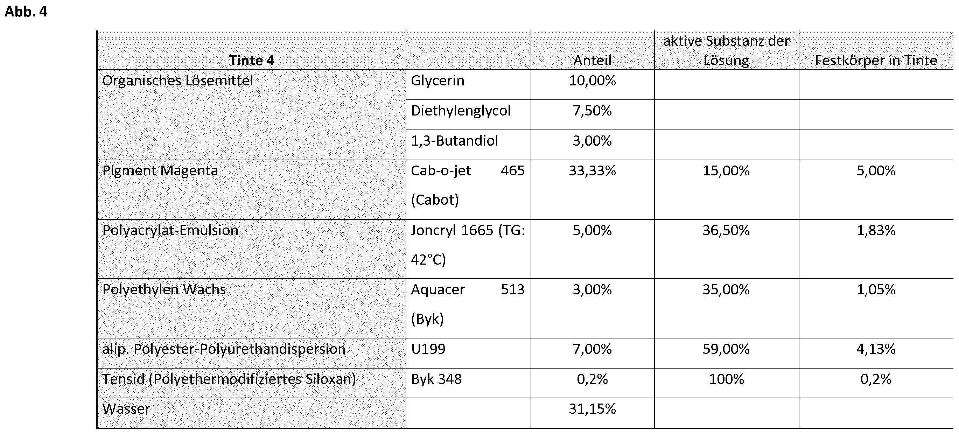

Die wässrige Tintenzusammensetzung enthielt die der Abb. 4 zu entnehmenden Inhaltsstoffe.

Die Tintenzusammensetzung Tinte 4 wies einen Wassergehalt von 67,48 Gew.-% auf.

Tinte 4 zeigte ebenfalls hervorragende Trocknungseigenschaften, bzw. eine gute Wischfestigkeit auf Kunststoffoberflächen. Hierbei kam es erneut auch nach längeren Standzeiten nicht zu einem Eintrocknen des Piezo-Druckkopfes. Weiterhin zeigte die Tinte eine besonders gute Kratzfestigkeit. Erneut zeigte die Tinte eine besonders gute Haftung auf Kunststoffoberflächen, insbesondere auf PET-Oberflächen.

### Tinte 5

Bei Tinte 5 handelt es sich um eine wässrige Tintenzusammensetzung, bei der ein Polyacrylat, ein Polyurethan, ein selbst-kreuzvernetzendes Polyacrylat und ein HDPE-Wachs verwendet wurde. Weiterhin kam als organisches Lösungsmittel eine Kombination von Glycerin, 1,2-Propandiol und Diethylenglykol zum Einsatz.

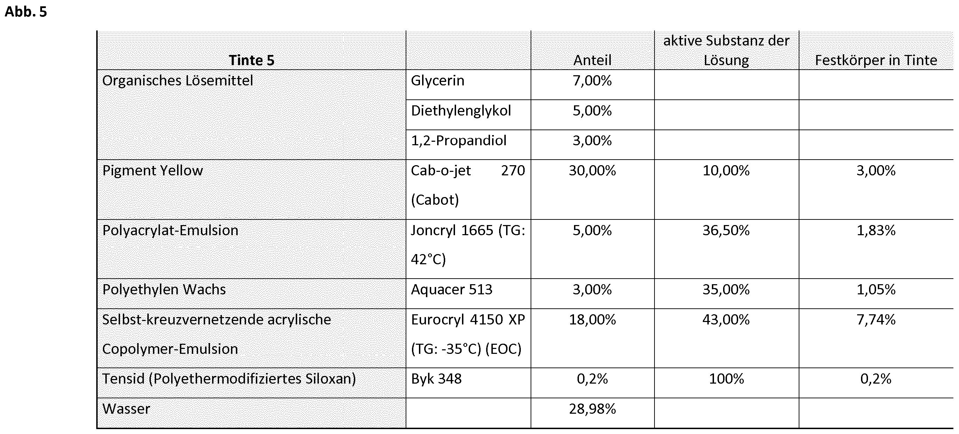

Die wässrige Tintenzusammensetzung enthielt die der Abb. 5 zu entnehmenden Inhaltsstoffe.

Die Tintenzusammensetzung Tinte 5 wies einen Wassergehalt von 71,37 Gew.-% auf.

Tinte 5 zeigte ebenfalls hervorragende Trocknungseigenschaften, bzw. eine gute Wischfestigkeit auf Kunststoffoberflächen. Hierbei kam es erneut auch nach längeren Standzeiten nicht zu einem Eintrocknen des Piezo-Druckkopfes. Weiterhin zeigte die Tinte erneut eine besonders gute Kratzfestigkeit, sowie ein schnelleres Antrocknungsverhalten, insbesondere auf einer Kunststoffoberfläche, auf.

### Tinte 6

Bei Tinte 6 handelt es sich um eine wässrige Tintenzusammensetzung, bei der ein Polyacrylat, ein selbst-kreuzvernetzendes Polyacrylat und ein HDPE-Wachs verwendet wurde. Weiterhin kam als organisches Lösungsmittel eine Kombination von Glycerin, 1,2-Pentandiol und Diethylenglykol zum Einsatz.

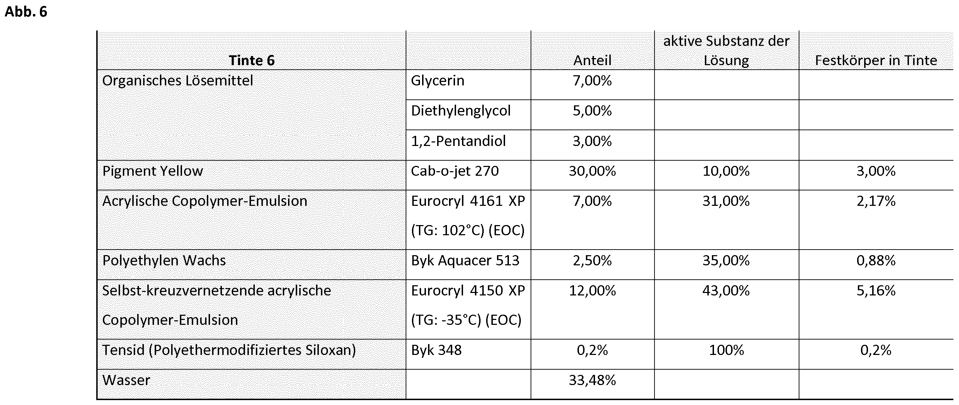

Die wässrige Tintenzusammensetzung enthielt die der Abb. 6 zu entnehmenden Inhaltsstoffe.

Die Tintenzusammensetzung Tinte 6 wies einen Wassergehalt von 73,78 Gew.-% auf.

Tinte 6 zeigte ebenfalls hervorragende Trocknungseigenschaften, bzw. eine gute Wischfestigkeit auf Kunststoffoberflächen. Hierbei kam es erneut auch nach längeren Standzeiten nicht zu einem Eintrocknen des Piezo-Druckkopfes. Weiterhin zeigte die Tinte erneut eine besonders gute Kratzfestigkeit, sowie ein schnelleres Antrocknungsverhalten, insbesondere auf einer Kunststoffoberfläche, auf.

### Tinte 7

Bei Tinte 7 handelt es sich um eine wässrige Tintenzusammensetzung, bei der ein Polyacrylat, ein selbst-kreuzvernetzendes Polyacrylat und ein HDPE-Wachs verwendet wurde. Weiterhin kam als organisches Lösungsmittel eine Kombination von Glycerin, 1,2-Pentandiol und Diethylenglykol zum Einsatz.

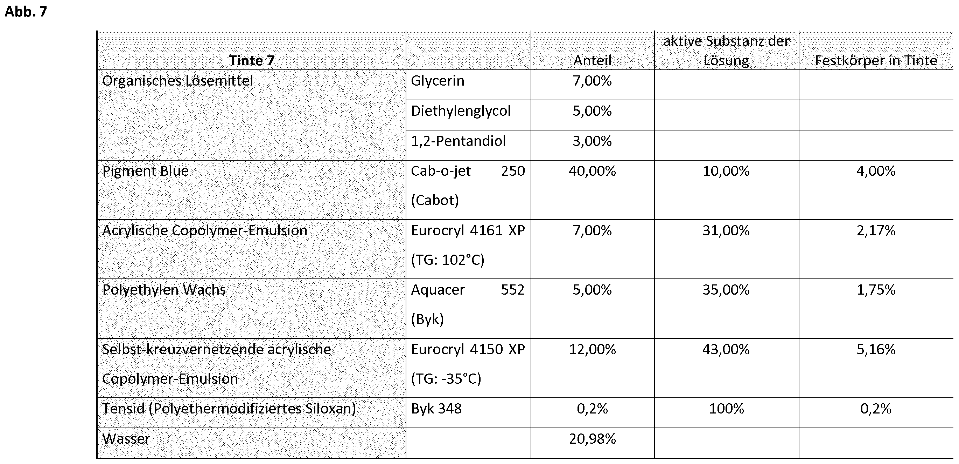

Die wässrige Tintenzusammensetzung enthielt die der Abb. 7 zu entnehmenden Inhaltsstoffe.

Die Tintenzusammensetzung Tinte 7 wies einen Wassergehalt von 71,90 Gew.-% auf.

Tinte 7 zeigte ebenfalls hervorragende Trocknungseigenschaften, bzw. eine gute Wischfestigkeit auf Kunststoffoberflächen. Hierbei kam es erneut auch nach längeren Standzeiten nicht zu einem Eintrocknen des Piezo-Druckkopfes. Weiterhin zeigte die Tinte erneut eine besonders gute Kratzfestigkeit, sowie ein schnelleres Antrocknungsverhalten, insbesondere auf einer Kunststoffoberfläche, auf.

### Tinte 8

Bei Tinte 8 handelt es sich um eine wässrige Tintenzusammensetzung, bei der zwei Polyacrylate, ein selbst-kreuzvernetzendes Polyacrylat und ein HDPE-Wachs verwendet wurde. Weiterhin kam als organisches Lösungsmittel eine Kombination von Glycerin, 1,2-Pentandiol und Diethylenglykol zum Einsatz.

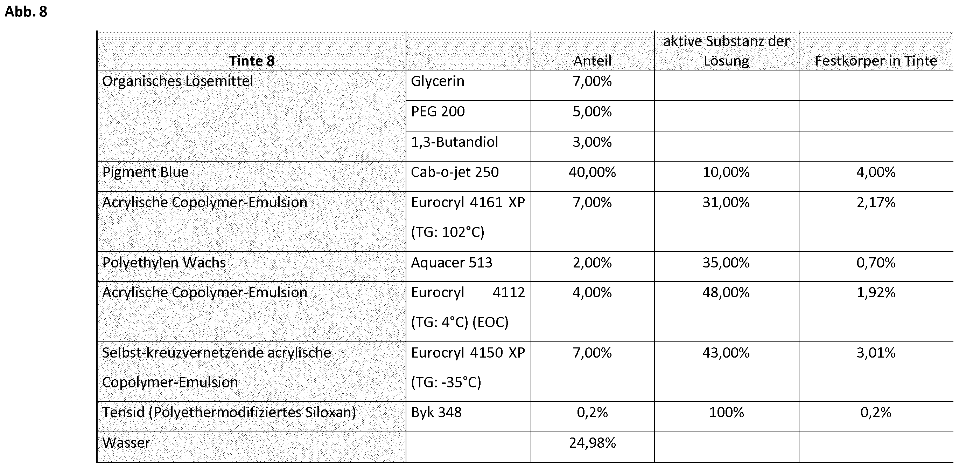

Die wässrige Tintenzusammensetzung enthielt die der Abb. 8 zu entnehmenden Inhaltsstoffe.

Die Tintenzusammensetzung Tinte 8 wies einen Wassergehalt von 73,18 Gew.-% auf.

Tinte 8 zeigte ebenfalls hervorragende Trocknungseigenschaften, bzw. eine gute Wischfestigkeit auf Kunststoffoberflächen. Hierbei kam es erneut auch nach längeren Standzeiten nicht zu einem Eintrocknen des Piezo-Druckkopfes. Weiterhin zeigte die Tinte erneut eine besonders gute Kratzfestigkeit, sowie ein verbessertes Antrocknungsverhalten, insbesondere auf einer Kunststoffoberfläche, auf.

### Tinte 9

Bei Tinte 9 handelt es sich um eine wässrige Tintenzusammensetzung, bei der ein Polyacrylat, ein selbst-kreuzvernetzendes Polyacrylat und ein HDPE-Wachs verwendet wurde. Weiterhin kam als organisches Lösungsmittel eine Kombination von Glycerin, 1,2-Pentandiol und Diethylenglykol zum Einsatz.

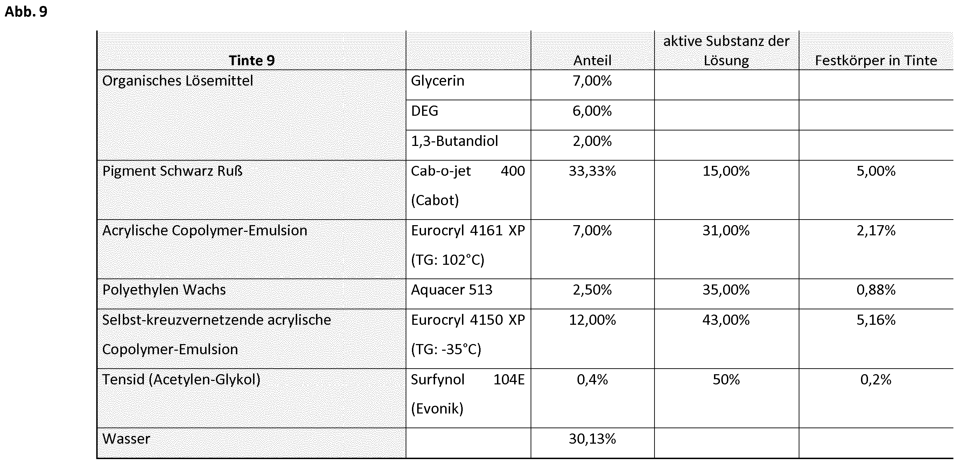

Die wässrige Tintenzusammensetzung enthielt die der Abb. 9 zu entnehmenden Inhaltsstoffe.

Die Tintenzusammensetzung Tinte 9 wies einen Wassergehalt von 71,76 Gew.-% auf.

Tinte 9 zeigte ebenfalls hervorragende Trocknungseigenschaften, bzw. eine gute Wischfestigkeit auf Kunststoffoberflächen. Hierbei kam es erneut auch nach längeren Standzeiten nicht zu einem Eintrocknen des Piezo-Druckkopfes. Weiterhin zeigte die Tinte erneut eine besonders gute Kratzfestigkeit, sowie ein verbessertes Antrocknungsverhalten, insbesondere auf einer Kunststoffoberfläche, auf.

## Patentansprüche

1. Verwendung einer wasserbasierten Tintenzusammensetzung für Tintenstrahldrucker aufweisend
- zumindest ein organisches Lösungsmittel,
- zumindest ein Pigment und
- zumindest ein Polyacrylat,
wobei
- die Tintenzusammensetzung eine bei 25 °C nach ISO 2555 : 1989 bestimmte, dynamische Viskosität im Bereich von ≥ 2 und ≤ 20 cP aufweist und
- zum Bedrucken einer Oberfläche aufweisend zumindest einen Kunststoff geeignet ist,
wobei der Kunststoff ausgewählt ist aus der Gruppe bestehend aus Low Density Polyethylen (LDPE), Polypropylen, orientiertes Polypropylen (OPP), Polyester und Polyethylenterephthalat (PET), Polyvinylchlorid (PVC), Acrylnitril-Butadien-Styrol-Copolymer (ABS) und ABS-TCU, **dadurch gekennzeichnet, dass** das Pigment eine Partikelgröße (D90) von ≤ 1 µm, bestimmt mittels Laserbeugung, aufweist, und das Pigment in einer Konzentration von ≥ 1 Gew.-% und ≤ 15 Gew.-% vorliegt.

2. Verwendung nach Anspruch 1, wobei der Kunststoff ausgewählt ist aus der Gruppe bestehend aus LDPE, OPP und PET.

3. Verwendung nach einem der zuvor stehenden Ansprüche, wobei die Tinte eine statische Oberflächenspannung von ≤ 40 mN/m aufweist.

4. Verwendung nach einem der zuvor stehenden Ansprüche, wobei die Tintenzusammensetzung das Polyacrylat in einer Konzentration von ≥ 1,5 und ≤ 20 Gew.-% aufweist.

5. Verwendung nach einem der zuvor stehenden Ansprüche, wobei die Tintenzusammensetzung das organische Lösemittel in einer Konzentration von ≥ 6 Gew.-% und ≤ 40 Gew.-% enthält.

6. Verwendung nach einem der zuvor stehenden Ansprüche, wobei das organische Lösemittel ausgewählt ist aus der Gruppe bestehend aus Glycerin, einem Diol, einem Ethylenglycol und Mischungen davon.

7. Verwendung nach Anspruch 6, wobei das organische Lösungsmittel eine Mischung aus Glyerin und einem Diol und optional einem Ethylenglycol ist.

8. Verwendung nach Anspruch 6 oder 7, wobei das Diol 1,2-Pentandiol, 1,3-Butandiol oder 1,2-Propandiol ist und/oder das Ethylenglycol Diethylenglycol oder Polyethylenglycol ist.

9. Verwendung nach einem der Ansprüche 6 bis 8, wobei die Tintenzusammensetzung aufweist:
≥ 6 und ≤ 20 Gew.-%, bevorzugt ≥ 11 und ≤ 15 Gew.-%, des organischen Lösungsmittels,
≥ 3 und ≤ 12 Gew.-% des Pigments, sowie
≥ 2 und ≤ 20 Gew.-% zumindest eines Polyacrylat-Copolymers.

10. Verwendung nach einem der zuvor stehenden Ansprüche, wobei die Tintenzusammensetzung zusätzlich zumindest ein Polyurethan und/oder ein selbst-kreuzvernetzendes Polyacrylat aufweist.

11. Verwendung nach einem der zuvor stehenden Ansprüche, wobei die Tintenzusammensetzung zusätzlich zumindest ein Wachs aufweist.

12. Verwendung der wasserbasierten Tintenzusammensetzung nach einem der zuvor stehenden Ansprüche mit einem Tintenstrahldrucker zum Bedrucken einer Oberfläche aufweisend zumindest einen Kunststoff.

13. Kunststoffmaterial aufweisend zumindest eine Oberfläche, wobei die Oberfläche die Tintenzusammensetzung nach einem der Ansprüche 1 bis 11 aufweist.

14. Kunststoffmaterial nach Anspruch 13, wobei das Kunststoffmaterial zumindest einen Kunststoff aufweist, ausgewählt aus der Gruppe bestehend aus Low Density Polyethylen (LDPE), orientiertes Polyporopylen (OPP), Polyethylenterephthalat (PET), Polyvinylchlorid (PVC), Acrylnitril-Butadien-Styrol-Copolymer (ABS) und ABS-TCU.

## Claims

1. Use of a water-based ink composition for inkjet printers, comprising
- at least one organic solvent,
- at least one pigment, and
- at least one polyacrylate,
- the ink composition having a particular dynamic viscosity in the range of ≥ 2 and ≤ 20 cP at 25°C in accordance with ISO 2555:1989, and
- being suitable for printing on a surface comprising at least one plastics material,
the plastics material being selected from the group consisting of low-density polyethylene (LDPE), polypropylene, oriented polypropylene (OPP), polyester and polyethylene terephthalate (PET), polyvinyl chloride (PVC), acrylonitrile-butadiene-styrene copolymer (ABS), and ABS-TCU,
**characterized in that** the pigment has a particle size (D90) of ≤ 1 µm, determined by means of laser diffraction, and the pigment is present in a concentration of ≥ 1 wt.% and ≤ 15 wt.%.

2. Use according to claim 1, wherein the plastics material is selected from the group consisting of LDPE, OPP, and PET.

3. Use according to either of the preceding claims, wherein the ink has a static surface tension of ≤ 40 mN/m.

4. Use according to any of the preceding claims, wherein the ink composition comprises the polyacrylate in a concentration of ≥ 1.5 and ≤ 20 wt.%.

5. Use according to any of the preceding claims, wherein the ink composition contains the organic solvent in a concentration of ≥ 6 wt.% and ≤ 40 wt.%.

6. Use according to any of the preceding claims, wherein the organic solvent is selected from the group consisting of glycerol, a diol, an ethylene glycol, and mixtures thereof.

7. Use according to claim 6, wherein the organic solvent is a mixture of glycerol and a diol and optionally an ethylene glycol.

8. Use according to either claim 6 or claim 7, wherein the diol is 1,2-pentanediol, 1,3-butanediol, or 1,2-propanediol and/or the ethylene glycol is diethylene glycol or polyethylene glycol.

9. Use according to any of claims 6 to 8, wherein the ink composition comprises:
≥ 6 and ≤ 20 wt.%, preferably ≥ 11 and ≤ 15 wt.%, of the organic solvent,
≥ 3 and ≤12 wt.% of the pigment, and
≥ 2 and ≤ 20 wt.% of at least one polyacrylate copolymer.

10. Use according to any of the preceding claims, wherein the ink composition additionally comprises at least one polyurethane and/or a self-crosslinking polyacrylate.

11. Use according to any of the preceding claims, wherein the ink composition additionally comprises at least one wax.

12. Use of the water-based ink composition according to any of the preceding claims with an inkjet printer for printing on a surface comprising at least one plastics material.

13. Plastics material comprising at least one surface, wherein the surface comprises the ink composition according to any of claims 1 to 11.

14. Plastics material according to claim 13, wherein the plastics material comprises at least one plastics material selected from the group consisting of low-density polyethylene (LDPE), oriented polypropylene (OPP), polyethylene terephthalate (PET), polyvinyl chloride (PVC), acrylonitrile-butadiene-styrene copolymer (ABS), and ABS-TCU.

## Revendications

1. Utilisation d'une composition d'encre à base d'eau pour imprimantes à jet d'encre, la composition comprenant
- au moins un solvant organique,
- au moins un pigment et
- au moins un polyacrylate,
- la composition d'encre présentant une viscosité dynamique déterminée à 25 °C selon la norme ISO 2555:1989 dans la plage de ≥ 2 à ≤ 20 cP, et
- convenant pour l'impression d'une surface présentant au moins un plastique,
le plastique étant choisi dans le groupe constitué par le polyéthylène basse densité (LDPE), le polypropylène, le polypropylène orienté (OPP), le polyester et polyéthylène téréphtalate (PET), le chlorure de polyvinyle (PVC), le copolymère d'acrylonitrile-butadiène-styrène (ABS) et l'ABS-TCU, **caractérisée en ce que** le pigment présente une granulométrie (D90) de ≤ 1 µm, déterminée au moyen d'une diffraction laser, et le pigment étant présent à une concentration de ≥ 1 % en poids à ≤ 15 % en poids.

2. Utilisation selon la revendication 1, dans laquelle le plastique est choisi dans le groupe constitué par LDPE, OPP et PET.

3. Utilisation selon l'une des revendications précédentes, dans laquelle l'encre présente une tension superficielle statique de ≤ 40 mN/m.

4. Utilisation selon l'une des revendications précédentes, dans laquelle la composition d'encre présente le polyacrylate à une concentration de ≥ 1,5 à ≤ 20 % en poids.

5. Utilisation selon l'une des revendications précédentes, dans laquelle la composition d'encre contient le solvant organique à une concentration de ≥ 6 % en poids à ≤ 40 % en poids.

6. Utilisation selon l'une des revendications précédentes, dans laquelle le solvant organique est choisi dans le groupe constitué par le glycérol, un diol, un éthylène glycol et leurs mélanges.

7. Utilisation selon la revendication 6, dans laquelle le solvant organique est un mélange de glycérol et d'un diol et éventuellement d'un éthylène glycol.

8. Utilisation selon la revendication 6 ou 7, dans laquelle le diol est le 1,2-pentanediol, le 1,3-butanediol ou le 1,2-propanediol et/ou l'éthylène glycol est le diéthylène glycol ou le polyéthylène glycol.

9. Utilisation selon l'une des revendications 6 à 8, dans laquelle la composition d'encre présente :
entre ≥ 6 et ≤ 20 % en poids, de préférence ≥ 11 et ≤ 15 % en poids du solvant organique,
entre ≥ 3 et ≤ 12 % en poids du pigment, et
entre ≥ 2 et ≤ 20 % en poids d'au moins un copolymère polyacrylate.

10. Utilisation selon l'une des revendications précédentes, dans laquelle la composition d'encre comprend en outre au moins un polyuréthane et/ou un polyacrylate autoréticulant.

11. Utilisation selon l'une quelconque des revendications précédentes, dans laquelle la composition d'encre comprend en outre au moins une cire.

12. Utilisation de la composition d'encre à base d'eau selon l'une des revendications précédentes, comprenant une imprimante à jet d'encre pour l'impression d'une surface présentant au moins un plastique.

13. Matière plastique présentant au moins une surface, dans laquelle la surface présente la composition d'encre selon l'une des revendications 1 à 11.

14. Matière plastique selon la revendication 13, la matière plastique présentant au moins un plastique choisi dans le groupe constitué par le polyéthylène basse densité (LDPE), le polypropylène orienté (OPP), le polyéthylène téréphtalate (PET), le chlorure de polyvinyle (PVC), le copolymère d'acrylonitrile-butadiène-styrène (ABS) et l'ABS-TCU.
